# EUROPÄISCHE PATENTSCHRIFT

(11) **EP 2 263 899 B1**
(45) Veröffentlichungstag und Bekanntmachung des Hinweises auf die Patenterteilung: **20.08.2014**
(21) Anmeldenummer: 10181133.9
(22) Anmeldetag: 03.05.2006
(51) Int. Cl.: B60K 1/00, B60K 17/08, B60K 17/16, F16H 57/02, F16H 57/04, F16H 63/34

(54) **Antriebseinheit für ein Kraftfahrzeug**
Drive unit for a motor vehicle
Unité d'entraînement pour un véhicule automobile

(30) Priorität: 13.05.2005 DE 102005022926
(43) Veröffentlichungstag der Anmeldung: 22.12.2010
(62) Teilanmeldung aus: 06753471.9
(73) Patentinhaber: GETRAG Getriebe- und Zahnradfabrik Hermann Hagenmeyer GmbH & Cie KG, 74199 Untergruppenbach (DE)
(72) Erfinder: Knoblauch, Daniel, 74199 Untergruppenbach (DE); Knödel, Ulrich, 74379 Ingersheim (DE); Stammberger, Marc, 75438 Knittlingen (DE)
(74) Vertreter: Witte, Weller & Partner Patentanwälte mbB

(56) Entgegenhaltungen:
- EP-A1- 0 631 070
- EP-A2- 1 035 358
- DE-A1- 4 305 055
- DE-A1- 10 021 177
- JP-A- 7 139 628
- JP-A- 2002 039 380
- US-A- 5 637 048

## Beschreibung

Die vorliegende Erfindung betrifft eine Antriebseinheit für ein Kraftfahrzeug, mit einem elektrischen Antriebsmotor, einem Wechselgetriebe mit wenigstens zwei Gangstufen und einer Parksperreinrichtung.

Eine derartige Antriebseinheit ist bekannt aus der DE 43 05 055 A1.

Elektrofahrzeuge mit einer elektrischen Antriebseinheit sind seit langem bekannt. Bislang bestand das Ziel bei derartigen Elektrofahrzeugen darin, Emissionen zu vermeiden, wie sie bei einem Verbrennungsmotor auftreten. Derartige Fahrzeuge sind daher vorwiegend unter dem Gesichtspunkt entwickelt worden, im Stadtbetrieb angemessene Fahrleistungen zu erzielen. Die Reichweite ist für längere Fahrten generell unzureichend. Dies liegt auch an dem notwendigen schweren Energiespeicher in Form eines Akkumulators, einer Brennstoffzelle oder Ähnlichem.

Seit einigen Jahren sind auch Hybrid-Antriebe im Einsatz. Hier besteht das Ziel darin, bei bestimmten Fahrsituationen keine Emissionen zu erzeugen, längere Fahrten mit dem Verbrennungsmotor jedoch zu ermöglichen.

Ferner kann bei derartigen Hybrid-Konzepten ein Vorteil daraus gezogen werden, dass die Antriebsmotoren parallel geschaltet (Boost-Betrieb), und dass gegebenenfalls eine Rekuperation erfolgen kann (beispielsweise im Schubbetrieb).

Aus der DE 42 12 324 A1 ist eine Antriebseinheit zum Antrieb eines Stadtautos mittels Elektromotor bekannt. Die Antriebseinheit beinhaltet ein Schaltgetriebe, das zwei Geschwindigkeiten in Vorwärtsrichtung und einen Rückwärtsgang aufweist.

Das Schaltgetriebe weist eine erste Welle auf, die sich aus einem Gehäuse des Getriebes heraus erstreckt und außerhalb des Gehäuses mit dem Elektromotor verbindbar ist. An der ersten Welle sind zwei Ritzel für die zwei Gangstufen festgelegt.

An einer zweiten Welle sind zwei den Ritzeln entsprechende Losräder gelagert, die mittels zweier Kupplungen schaltbar sind. Diese werden so geschaltet, dass jeweils eine der Kupplungen geöffnet und die andere geschlossen ist. Die Neutralstellung wird durch Abschalten des Elektromotors bestimmt.

Ein vom Konzept her ähnlicher Antriebsstrang ist aus der DE 199 17 724 A1 bekannt. Bei diesem Antriebsstrang sind an einer Getriebewelle zwei Losräder gelagert, die jeweils außenseitig mit einer zugeordneten Kupplungseinrichtung verbunden sind.

Die Losräder stehen jeweils mit einem Festrad in Eingriff. Die Festräder sind an einem Differentialkorb eines Ausgleichsgetriebes der zugeordneten Achse des Kraftfahrzeuges festgelegt.

Aus der DE 43 05 055 A1 ist eine Achsantriebseinheit für ein Elektromobil bekannt, nach dem einleitenden Teil des Anspruchs 1, mit einem Elektromotor, einem Schaltgetriebe, bei dem eine Antriebswelle mit Losrädern versehen ist, die mit Festrädern kämmen und wahlweise mit ihrer Welle kuppelbar sind, und mit einem Ausgleichsgetriebe, dessen Differentialkorb koaxial zu Achsantriebswellen ausgerichtet ist. Um eine möglichst kleine, leichte und billige Antriebseinheit zu schaffen, ist der Differentialkorb selbst die Abtriebswelle des Getriebes, und die Losräder sind mittels einer Schaltmuffe mit der Antriebswelle verbindbar. Die Schaltmuffe bedient dabei eine erste Klauenkupplung zur Verbindung des ersten Losrades mit der Antriebswelle und eine zweite Klauenkupplung zur Verbindung des zweiten Losrades mit der Antriebswelle.

Die Antriebswelle ist über einen Konstanten-Radsatz mit einer Kuppelhülse verbunden, die drehbar in dem Getriebegehäuse gelagert ist. Die Kuppelhülse ist mit einer Motorwelle verbindbar, und zwar durch eine Öffnung in dem Getriebegehäusedeckel hindurch. Das an der Kuppelhülse festgelegte Antriebsritzel des Konstanten-Radsatzes ist in unmittelbarer Nachbarschaft mittels eines ersten Lagers, das an dem Hauptgehäuse festgelegt ist, und eines zweiten Lagers gelagert, das an dem Getriebegehäusedeckel gelagert ist.

Das Ausgleichsgetriebe ist gleichfalls innerhalb des Hauptgehäuseteils gelagert.

An dem Differentialkorb des Ausgleichsgetriebes ist ferner ein Sperrenrad festgelegt, das mittels einer von Hand oder automatisch betätigbaren Klinke zusammenwirken kann, um eine Parksperreneinrichtung zu realisieren.

Die bekannten Antriebseinheiten weisen entweder ein unbefriedigendes Leistungsgewicht, eine unzureichende Getriebeakustik und/oder eine unbefriedigende Fahrdynamik auf.

Aus der EP 0 631 070 A1 ist eine Antriebseinheit für ein Kraftfahrzeug bekannt, mit einem elektrischen Antriebsmotor, einem Übersetzungsgetriebe zwischen dem Motor und einem Ausgleichsgetriebe und mit einer Parksperreneinrichtung, wobei die Parksperreneinrichtung an einer mit der Motorwelle drehfest verbundenen Antriebswelle angreift.

Demzufolge besteht die Aufgabe der Erfindung darin, eine verbesserte Antriebseinheit für ein Kraftfahrzeug anzugeben.

Diese Aufgabe wird gemäß der vorliegenden Erfindung bei der eingangs genannten Antriebseinheit dadurch gelöst, dass die Parksperreneinrichtung an einer Motorwelle des Antriebsmotors oder an einer hiermit drehfest verbundenen Antriebswelle angreift, wobei die Parksperreneinrichtung eine Sperrmuffe aufweist, die mit einer Innen- und mit einer Außenverzahnung versehen und axial in Bezug auf die Motorwelle bzw. die hiermit verbundene Antriebswelle verschiebbar ist, und zwar zwischen einer Freigabeposition und einer Sperrposition, wobei die Außenverzahnung der Sperrmuffe in einem gehäusefesten Abschnitt der Antriebseinheit axial geführt ist, und wobei die Motorwelle oder die hiermit verbundene Antriebswelle einen Außenverzahnungsabschnitt aufweist, auf den die Sperrmuffe verschiebbar ist, um die Sperrposition einzurichten.

Diese Maßnahme hat den Vorteil, dass eine günstige Dimensionierung möglich ist, insbesondere, da die im Bereich der Motorwelle auftretenden Drehmomente durch die vergleichsweise hohe Übersetzung relativ gering sind, verglichen mit den Momenten, die an der Ausgangsseite der Antriebseinheit anstehen. Eine Parksperreneinrichtung mit einer solchen Sperrmuffe lässt sich auch in anderen Getrieben verwenden, und zwar insbesondere auf der Antriebsseite.

Insgesamt ist es vorteilhaft, wenn die Innenverzahnung der Sperrmuffe und/oder der Außenverzahnungsabschnitt der Motorwelle bzw. der hiermit verbundenen Antriebswelle an dem axial zu der jeweils anderen Verzahnung weisenden Stirnseite angespitzt ist.

Dies ermöglicht ein schnelles Einspuren, und zwar selbst dann, wenn noch eine gewisse Relativdrehzahl vorhanden ist, bzw. ein Abweisen bei zu hoher Relativdrehzahl.

Auch ist es insgesamt vorteilhaft, wenn die Parksperreneinrichtung mittels einer elektromotorischen Aktuatoreinrichtung betätigbar ist.

Zwar ist generell auch eine andere Art von Aktuatoreinrichtung zur Betätigung der Parksperreneinrichtung denkbar, wie beispielsweise eine hydraulische oder manuelle Aktuatoreinrichtung.

Eine elektromotorische Aktuatoreinrichtung ist jedoch bevorzugt, zumal die Antriebseinheit ohnehin mit elektrischen Anschlüssen für den elektrischen Antriebsmotor versehen ist.

Vorteilhaft ist es ferner, wenn die Sperrmuffe in Bezug auf die Aktuatoreinrichtung in Richtung in die Sperrposition elastisch vorgespannt ist.

Hierbei ist es möglich, dass die Parksperreneinrichtung betätigt wird, und zwar mittels der Aktuatoreinrichtung, wobei jedoch die Verzahnungen aufgrund der gegebenen Relativposition nicht ineinander eingreifen können. Hierbei wird durch die elastische Vorspannung die notwendige Energie gespeichert, die zum Einspuren notwendig ist, sobald sich eine geringe Relativverdrehung ergibt, die das Einspuren ermöglicht.

Gemäß einer weiteren bevorzugten Ausführungsform dient die Aktuatoranordnung sowohl zur Betätigung der Parksperreneinrichtung als auch zur Betätigung von Schaltkupplungen zum Ein- und Auslegen der Gangstufen des Wechselgetriebes.

Durch die Maßnahme, die gleiche Aktuatoreinrichtung, insbesondere eine Schaltwalze, sowohl zum Betätigen der Gangstufen des Wechselgetriebes als auch zur Betätigung der Parksperreneinrichtung vorzusehen, kann insgesamt eine kompakte Bauweise mit wenig Aktuatorik realisiert werden.

Vorteilhaft ist es auch, wenn eine Motorwelle des Antriebsmotors oder eine hiermit verbundene Antriebswelle über einen Konstanten-Radsatz mit einer Zwischenwelle des Wechselgetriebes verbunden ist, und wenn die Aktuatoranordnung in axialer Richtung ganz oder zumindest teilweise zwischen dem Antriebsmotor und dem Konstanten-Radsatz angeordnet ist.

Auch dies trägt zu einer kompakten axialen Bauweise bei.

Ferner ist es vorteilhaft, wenn die Parksperreneinrichtung in axialer Richtung zwischen dem Antriebsmotor und dem Konstanten-Radsatz angeordnet ist.

Der Antriebsmotor ist bei einer bevorzugten Ausführungsform für Drehzahlen größer 15.000 U/min ausgelegt, vorzugsweise für Drehzahlen größer 20.000 U/min.

Auch ist es insgesamt vorteilhaft, wenn in dem Gehäuse ein Kühlpfad zur Kühlung des Antriebsmotors ausgebildet ist.

Es ist weiterhin bevorzugt, wenn der Radsatz ein erstes, vorzugsweise antreibendes Zahnrad und ein zweites Zahnrad aufweist, das in axialer Richtung schmaler ausgebildet ist als das erste Zahnrad, und wobei das zweite Zahnrad an wenigstens einer axialen Außenseite eine Ausnehmung aufweist, die innenumfänglich eine Ringtasche zur Aufnahme von Schmier- bzw. Kühlfluid aufweist, und wobei sich von der Ringtasche wenigstens ein Schmierkanal radial nach außen erstreckt, durch den hindurch während des Betriebs Schmier- bzw. Kühlfluid auf die Verzahnung des ersten Zahnrades strömt.

Durch diese Maßnahme kann eine besonders effiziente Schmierung bzw. Kühlung des Radsatzes, insbesondere des Konstanten-Radsatzes der erfindungsgemäßen Antriebseinheit erzielt werden.

Von besonderem Vorteil ist es dabei, wenn an der axialen Außenseite des zweiten Zahnrades eine Ringscheibe befestigt ist, die die Ringtasche axial begrenzt, und wobei zwischen der Ringscheibe und der axialen Außenseite ein Ringspalt eingerichtet ist, der den Schmierkanal bildet.

Auf diese Weise kann der Schmierkanal ohne Schwächung des Radkörpers des zweiten Zahnrades eingerichtet werden.

Es versteht sich, dass hierbei insbesondere von Bedeutung ist, dass die Verzahnung des ersten Zahnrades breiter ausgebildet ist als jene des zweiten Zahnrades.

Gemäß einer weiteren bevorzugten Ausführungsform ist der Radsatz benachbart zu einem Gehäuse der Antriebseinheit gelagert, wobei an dem Gehäuse ein Fluidleitelement angeordnet ist, mittels dessen Fluid in axialer Richtung in die Ausnehmung geführt wird.

Das Fluidleitelement kann insbesondere so angeordnet sein, dass an dem Gehäuse herabströmendes Fluid in die Ringtasche geleitet wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform einer erfindungsgemäßen Antriebseinheit;
- Fig. 2: eine schematische Längsschnittansicht durch eine erfindungsgemäße Parksperreneinrichtung für eine Antriebseinheit;
- Fig. 3: eine schematische Querschnittsansicht entlang der Linie III-III in Fig. 2;
- Fig. 4: eine Längsschnittansicht durch ein Zahnrad eines Radsatzes; und
- Fig. 5: eine Detailansicht V der Fig. 4.

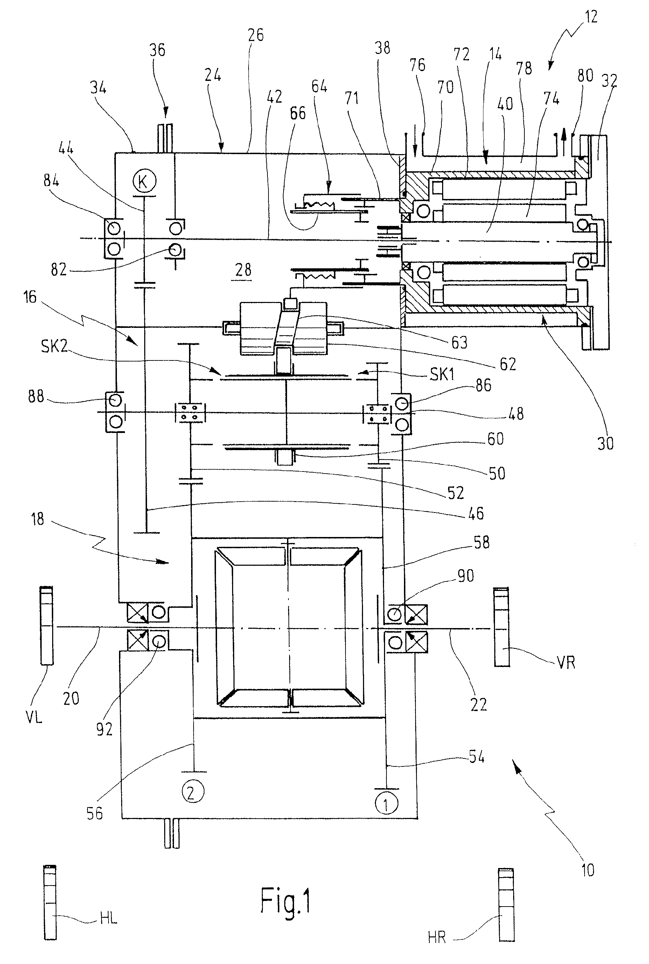

In Fig. 1 ist ein Kraftfahrzeug 10 schematisch dargestellt, das eine angetriebene Vorderachse mit einem linken Vorderrad VL und einem rechten Vorderrad VR sowie eine Hinterachse mit einem linken Hinterrad HL und einem rechten Hinterrad HR aufweist.

In Fig. 1 ist eine erste Ausführungsform einer erfindungsgemäßen Antriebseinheit zum Antrieb der Vorderachse generell mit 12 bezeichnet.

Alternativ kann die Antriebseinheit 12 auch zum Antrieb einer Hinterachse ausgelegt sein.

Die Antriebseinheit 12 weist einen elektrischen Antriebsmotor 14, ein Wechselgetriebe 16 und ein Ausgleichsgetriebe 18 auf.

Antriebsleistung wird von dem elektrischen Motor 14 erzeugt und über das Wechselgetriebe 16 auf das Ausgleichsgetriebe 18 geführt. Das Ausgleichsgetriebe 18 verteilt die Antriebsleistung auf eine linke Antriebswelle 20 und eine rechte Antriebswelle 22 der Vorderachse.

Die Antriebseinheit 12 weist ferner ein Gehäuse 24 auf. Das Gehäuse 24 beinhaltet eine aus einem Stück hergestellte Gehäusebasis 26. Die Gehäusebasis 26 beinhaltet einen Motorraum 30 zur Aufnahme des elektrischen Antriebsmotors 14. Der Motorraum 30 ist, in axialer Richtung gesehen, zu einer Seite hin offen, so dass der Antriebsmotor axial in den Motorraum 30 eingesetzt werden kann. Der Motorraum 30 ist mittels eines ersten Deckels 32 verschlossen, so dass der Antriebsmotor 14 gekapselt in dem Motorraum 30 aufgenommen werden kann. Der Einsatz verschiedener Motorvarianten durch einen ein- oder mehrteiligen Adapter (Statorgehäuse 70) ist möglich.

Die Gehäusebasis 26 definiert ferner einen zu dem Motorraum 30 benachbarten Getrieberaum 28, in dem das Wechselgetriebe 16 und das Ausgleichsgetriebe 18 aufgenommen sind. Der Getrieberaum 28 ist zu der anderen axialen Seite hin offen und ist mittels eines zweiten Deckels 34 verschlossen.

Demzufolge können auch das Wechselgetriebe 16 und das Ausgleichsgetriebe 18 durch seitliches Einschieben in den Getrieberaum 28 montiert werden, wobei der zweite Deckel 34 anschließend zur Verkapselung aufgesetzt wird.

Zur Verbindung zwischen der Gehäusebasis 26 und dem zweiten Deckel 34 ist eine Flanschverbindung 36 vorgesehen. Eine entsprechende Flanschverbindung zwischen der Gehäusebasis 26 und dem ersten Deckel 32 ist in Fig. 1 nicht näher bezeichnet.

Zwischen dem Motorraum 30 und dem Getrieberaum 28 ist eine Trennwand 38 eingerichtet. Die Trennwand 38 ist einstückig an der Gehäusebasis 26 ausgebildet, oder doch zumindest nach der Art eines Lagerschildes vormontiert darin festgelegt.

Die Trennwand 38 wird von einer Motorwelle 40 des elektrischen Antriebsmotors 14 durchsetzt. Etwa im Bereich der Trennwand 38 ist die Motorwelle 40 mit einer koaxial ausgerichteten Antriebswelle 42 verbunden, beispielsweise mittels einer Verzahnung.

Die Motorwelle 40 ist gegenüber der Trennwand 38 bzw. einem weiter unten erläuterten Statorgehäuse mittels einer Wellendichtung abgedichtet. Anders ausgedrückt durchsetzt die Motorwelle 40 (oder die Antriebswelle 42) zwar die Trennwand 38, durch geeignete Dichtungsmittel sind der Getrieberaum 28 und der Motorraum 30 dennoch gegeneinander abgedichtet.

Die Antriebswelle 42 erstreckt sich von dem elektrischen Antriebsmotor 14 in axialer Richtung durch den Getrieberaum 28 bis hin zu dem zweiten Deckel 34.

Unmittelbar benachbart zu dem zweiten Deckel 34 ist ein Konstanten-Radsatz K vorgesehen, der ein Antriebsritzel 44 und ein Konstanten-Rad 46 aufweist. Das Antriebsritzel 44 ist drehfest mit der Antriebswelle 42 verbunden, beispielsweise einstückig hiermit ausgebildet. Das Konstanten-Rad 46 ist drehfest mit einer Zwischenwelle 48 verbunden, die parallel zu der Antriebswelle 42 in dem Getrieberaum 28 gelagert ist.

An der Zwischenwelle 48 sind ein erstes Losrad 50 für eine erste Gangstufe 1 sowie ein zweites Losrad 52 für eine zweite Gangstufe 2 drehbar gelagert. Das erste Losrad 50 steht in Eingriff mit einem ersten Festrad 54. Das zweite Losrad 52 steht in Eingriff mit einem zweiten Festrad 56. Die Festräder 54, 56 sind drehfest mit einem Differentialkorb 58, d.h. einem Eingangsglied des Ausgleichsgetriebes 18, drehfest verbunden.

Antriebsleistung von dem elektrischen Antriebsmotor 14 wird somit von der Motorwelle 40 über die Antriebswelle 42, den Konstanten-Radsatz K, die Zwischenwelle 48 sowie einen der Radsätze 50, 54 bzw. 52, 56 auf den Differentialkorb 58 geleitet. Das Ausgleichsgetriebe 18 verteilt die Antriebsleistung dann in an sich bekannter Weise auf die zwei Antriebswellen 20, 22.

Zur Betätigung der zwei Gangstufen 1, 2 ist eine Aktuatoranordnung vorgesehen, die eine Schaltwalze 62 aufweist. Die Schaltwalze 62 ist um eine Achse drehbar in dem Getrieberaum 28 gelagert, die parallel zu den Wellen 42, 48 ausgerichtet ist. Mittels der Schaltwalze 62 wird eine Schaltmuffe 60 betätigt, die eine erste Schaltkupplung SK1 in Form einer Klauenkupplung oder alternativ eine zweite Schaltkupplung SK2 in Form einer Klauenkupplung betätigt. Die erste Schaltkupplung SK1 dient zum Verbinden des ersten Losrades 50 mit der Zwischenwelle 48. In entsprechender Weise dient die zweite Schaltkupplung SK2 zum drehfesten Verbinden des zweiten Losrades 52 mit der Zwischenwelle 48. In einer Neutralposition (in Fig. 1 dargestellt) ist keine der zwei Schaltkupplungen SK1, SK2 geschlossen.

An der Schaltwalze 62 ist eine Umfangsspur 63 (beispielsweise eine Umfangsnut 63) vorgesehen, in der ein nicht näher bezeichneter Gleitstein geführt ist, der die Schaltmuffe 60 betätigt.

In Fig. 1 ist bei 64 ferner eine Parksperreneinrichtung gezeigt.

Die Parksperreneinrichtung 64 ist antriebsseitig angeordnet, d.h. im Bereich von Motorwelle 40 bzw. Antriebswelle 42.

Die Parksperreneinrichtung 64 ist als im Wesentlichen koaxiales Bauteil zu diesen Wellen 40, 42 vorgesehen und weist eine Sperrmuffe 66 auf, die zwischen einer - in Fig. 1 gezeigten - Freigabeposition und einer Sperrposition axial verschieblich gelagert ist.

Die Sperrmuffe 66 weist eine in Fig. 1 nicht näher bezeichnete Außenverzahnung auf, die in Eingriff steht mit einer Innenverzahnung eines durch die Trennwand 38 hindurch verlaufenden Hülsenfortsatzes 71 eines Statorgehäuses 70 eines Stators 72 des elektrischen Antriebsmotors 14.

Das radial außen liegende Statorgehäuse 70 des Antriebsmotors 14 erstreckt sich mit seinem Hülsenfortsatz 71 durch die Trennwand 38 hindurch und ist radial außenseitig gegenüber der Trennwand 38 abgedichtet. Radial innenseitig ist zwischen dem Hülsenfortsatz 71 und der Motorwelle 40 eine Wellendichtung vorgesehen, so dass der Getrieberaum 28 gegenüber dem Motorraum 30 abgedichtet ist.

An der Motorwelle 40 ist, im Bereich der Verbindung mit der Antriebswelle 42, ein Außenverzahnungsabschnitt vorgesehen, der in der Sperrposition der Sperrmuffe 66 mit der Innenverzahnung der Sperrmuffe 66 in Eingriff steht. In Fig. 1 ist jedoch gezeigt, dass die Innenverzahnung der Sperrmuffe 66 mit diesem Außenverzahnungsabschnitt nicht in Eingriff steht.

Die Sperrmuffe 66 ist mittels der gleichen Aktuatoranordnung betätigbar wie die Schaltkupplungen SK2, SK1. In dem vorliegenden Fall ist es sogar so, dass ein Gleitstein, der mit der Sperrmuffe 66 in Verbindung steht, in der gleichen Umfangsspur 63 geführt ist wie der Gleitstein, der die Schaltkupplungen SK1, SK2 betätigt.

Insgesamt ergibt sich so ein hochkompakter Aufbau mit wenig Aktuatorik.

In Fig. 1 ist radial innerhalb des Stators 72 ferner ein Rotor 74 des elektrischen Antriebsmotors 14 gezeigt, der drehfest mit der Motorwelle 40 verbunden ist.

Die Motorwelle 40 ist zum einen benachbart zu der Trennwand 38 mittels eines Lagers gelagert, das an dem Statorgehäuse 70 festgelegt ist.

Am anderen axialen Ende ist die Motorwelle 40 mittels des ersten Deckels 32 gelagert.

Der elektrische Antriebsmotor 14 lässt sich daher auf einfache Weise montieren, nämlich indem er axial in den Motorraum 30 eingeschoben wird und anschließend der erste Deckel 32 aufgesetzt wird, um den Antriebsmotor 14 darin zu fixieren und zu lagern.

In dem Motorraum 30 ist radial um das Statorgehäuse 70 herum ein Kühlwasserkanal 78 ausgebildet, der über einen Kühlwasseranschluss 76 gespeist wird. Bei 80 ist ferner ein Kühlwasserauslass gezeigt, über den das - erwärmte - Kühlwasser abgeführt wird.

Die mit der Motorwelle 40 verbundene, vorzugsweise gegenüber dieser leicht axial beweglich gelagerte Antriebswelle 42 ist mittels eines ersten Antriebswellenlagers 82 und eines zweiten Antriebswellenlagers 84 gelagert, die unmittelbar benachbart auf gegenüberliegenden Seiten des Antriebsritzels 44 des Konstanten-Radsatzes K angeordnet sind. Das erste Antriebswellenlager 82 ist dabei an der Gehäusebasis 26 festgelegt. Das zweite Antriebswellenlager 84 ist an dem zweiten Deckel 34 festgelegt.

Die Zwischenwelle 48 ist mittels eines ersten Getriebewellenlagers 86 und eines zweiten Getriebewellenlagers 88 gelagert. Das erste Getriebewellenlager 86 ist an der Gehäusebasis 26 festgelegt. Das zweite Getriebewellenlager 88 ist an dem zweiten Deckel 34 festgelegt.

In entsprechender Weise ist das Ausgleichsgetriebe 18 mittels eines ersten Abtriebswellenlagers 90 und eines zweiten Abtriebswellenlagers 92 gelagert, wobei das erste Abtriebswellenlager 90 an der Gehäusebasis 26 festgelegt ist, und wobei das zweite Abtriebswellenlager 92 an dem zweiten Deckel 34 festgelegt ist.

Im Bereich des Austritts der Abtriebswellen 20, 22 aus der Gehäusebasis 26 und dem Deckel 34 sind ferner nicht näher bezeichnete Wellendichtungen vorgesehen.

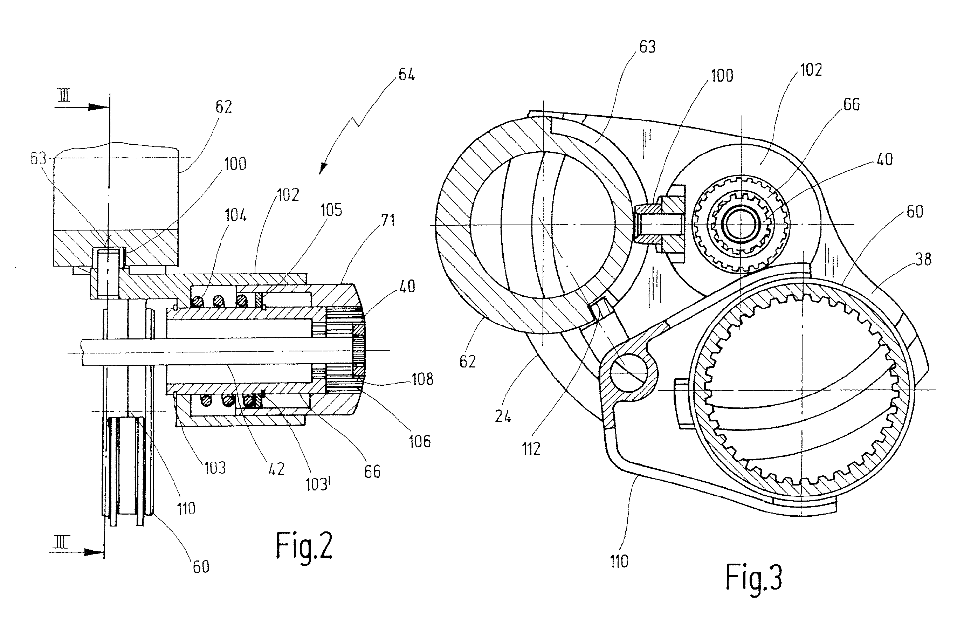

In den Fig. 2 und 3 ist in schematischer Form ein konstruktives Ausführungsbeispiel der Parksperreneinrichtung 64 dargestellt. Gleiche Elemente sind mit gleichen Bezugsziffern versehen.

Man erkennt, dass in der Umfangsspur (Umfangsnut) 63 der Schaltwalze 62 ein Gleitstein 100 geführt ist, der fest mit einer Schiebemuffe 102 verbunden ist.

Die Schiebemuffe 102 ist an ihrem zu der Motorwelle 40 weisenden Ende mit einer Ausnehmung versehen und ist auf den Hülsenfortsatz 71 des Statorgehäuses 70 aufgesteckt. Die Schiebemuffe 102 wird hierdurch in axialer Richtung an dem Hülsenfortsatz 71 geführt.

Die Sperrmuffe 66 ist innerhalb der Ausnehmung der Schiebemuffe 102 gelagert. Genauer gesagt ist die Sperrmuffe 66 an ihrem hinteren, von der Motorwelle 40 weg weisenden Ende außenumfänglich mit einem Sprengring 103 versehen. Die Sperrmuffe 66 durchsetzt verdrehfest eine axiale Durchgangsbohrung der Schiebemuffe 102, wobei der Sprengring 103 auf der der Motorwelle 40 abgewandten Außenseite der Schiebemuffe 102 anliegt. Im Inneren der Ausnehmung der Schiebemuffe 102 ist an dem Außenumfang der Sperrmuffe 66 eine Stützscheibe 105 festgelegt, die mittels eines weiteren Sprengringes 103' axial gehalten wird. Eine Druckfeder 104 ist zwischen der Stützscheibe 105 und dem Boden der Ausnehmung der Schiebemuffe 102 gelagert, und zwar außenumfänglich koaxial zu der Sperrmuffe 66. Die Druckfeder 104 drückt die Sperrmuffe 66 gegenüber der Schiebemuffe 102 in Richtung hin zu der Motorwelle 40 bzw. spannt die Sperrmuffe 66 in diese Richtung vor.

Die Sperrmuffe 66 ist an ihrem zu der Motorwelle 40 hin weisenden Ende mit einer Außenverzahnung (in Fig. 2 nicht näher bezeichnet) ausgebildet, die in einer Innenverzahnung 106 des Hülsenfortsatzes 71 geführt ist. Ferner ist die Sperrmuffe 66 als Hohlmuffe ausgebildet, die von der Antriebswelle 42 durchsetzt wird bzw. koaxial zu dieser angeordnet ist. In ihrem vorderen Bereich, also zu der Motorwelle 40 hin weisend, ist die Sperrmuffe 66 ferner mit einer axialen Innenverzahnung (nicht näher bezeichnet) ausgestattet.

In der in Fig. 2 gezeigten Position ist der Innenverzahnungsabschnitt der Sperrmuffe 66 beabstandet von einem Außenverzahnungsabschnitt 108, der an der Motorwelle 40 vorgesehen ist.

Man erkennt in Fig. 2 ferner, dass die Antriebswelle 42 an ihrem mit der Motorwelle 40 verbundenen Ende mit einer Außenverzahnung versehen ist, die in eine Innenverzahnung der Motorwelle 40 greift, und zwar zur drehfesten Verbindung hiermit.

Bei Betätigung der Parksperreneinrichtung 64 von der in Fig. 2 gezeigten Freigabeposition in die Sperrposition wird die Schaltwalze 62 verdreht. Mittels des Gleitsteines 100 wird die Schiebemuffe 102 versetzt, und zwar in Richtung hin zu der Motorwelle 40. Die Sperrmuffe 66 wird dabei mitgenommen.

Sobald der Innenverzahnungsabschnitt der Sperrmuffe 66 axial an den Außenverzahnungsabschnitt 108 der Motorwelle 40 gelangt, spuren die Verzahnungen ineinander ein. Hierdurch wird eine drehfeste Verbindung zwischen der Motorwelle 40 und dem gehäusefesten Statorgehäuse 70 eingerichtet. Ferner ist, was in Fig. 2 nicht dargestellt ist, in dieser Position die Schaltkupplung SK1 betätigt, so dass die Antriebswellen 20, 22 über die Verzahnungen der diversen Radsätze formschlüssig mit der Motorwelle 40 verbunden sind.

In Fig. 3 ist gezeigt, dass in die gleiche Umfangsnut 63 ein zweiter Gleitstein 112 eingreift, der mit einer Schaltgabel 110 verbunden ist, die dazu eingerichtet ist, die Schaltmuffe 60 zum Betätigen der Schaltkupplungen SK1, SK2 zu verschieben.

Die Innenverzahnung der Sperrmuffe 66 und/oder die Außenverzahnung 108 der Motorwelle 40 sind an ihren aufeinander zu weisenden Enden mit einer Anspitzung versehen, um ein Einspuren zu erleichtern. Ferner wird ab einer gewissen Relativdrehzahl durch die Anspitzung(en) das "Abweisen" der Sperrmuffe 66 durch die Außenverzahnung 108 erreicht.

Nichtsdestotrotz kann es aufgrund der Relativstellung zwischen der Motorwelle 40 und der Sperrmuffe 66 zum Zeitpunkt des Betätigens der Parksperreneinrichtung 64 dazu kommen, dass ein Einspuren nicht möglich ist. In diesem Fall wird bei fortgesetzter Betätigung der Schaltwalze 62 die Druckfeder 104 komprimiert. In diesem Zustand speichert die Druckfeder 104 Energie, und sobald - beispielsweise bei einem Wegrollen des Fahrzeugs - sich die Motorwelle 40 relativ zu der Sperrmuffe 66 verdreht, drückt die in der Druckfeder 104 gespeicherte Energie die Sperrmuffe 66 auf die Außenverzahnung 108 der Motorwelle 40, um so die Sperrposition einzurichten.

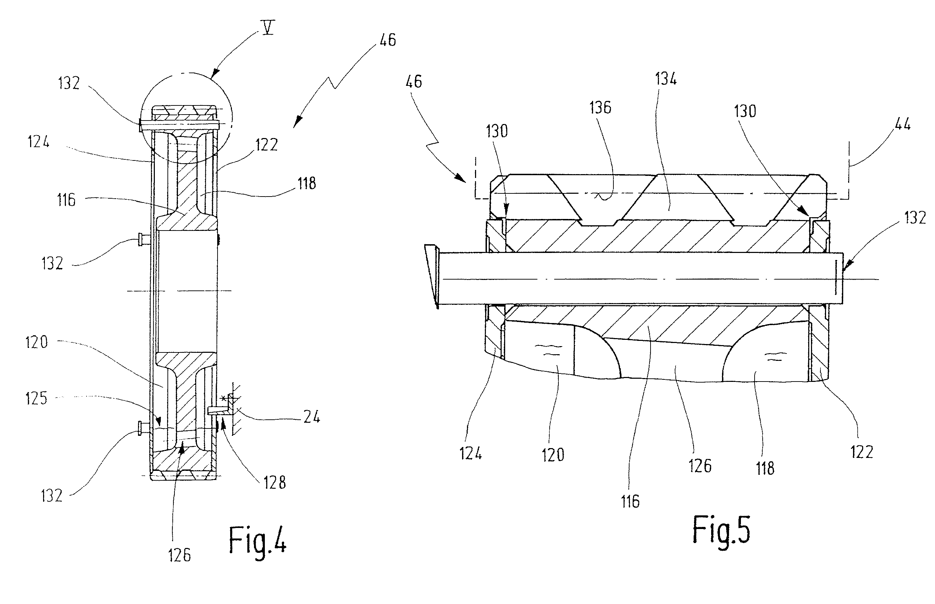

In den Fig. 4 und 5 ist ein Zahnrad, genauer gesagt das Konstanten-Rad 46 des Konstanten-Radsatzes K der Antriebseinheit 12, gezeigt. Die in Bezug auf die in den Fig. 4 und 5 gezeigten Zahnräder erläuterten Merkmale sind jedoch auf jede andere Zahnradpaarung in gleichem Maße anwendbar.

Das Konstanten-Rad 46 weist einen Radkörper 116 auf, der im Bereich zwischen seiner Nabe und der radial außen liegenden Verzahnung auf der einen Seite mit einer ersten Axialausnehmung 118 und auf der axial gegenüberliegenden Seite mit einer zweiten Axialausnehmung 120 ausgebildet ist.

Auf die axiale Seite des Radkörpers 116, bei der die ringförmige Axialausnehmung 118 ausgebildet ist, ist eine erste Spritzscheibe 122 aufgesetzt, die beispielsweise als Ringscheibe ausgebildet sein kann und einen Abschnitt der ersten Axialausnehmung 118 abdeckt. Genauer gesagt bedeckt die erste Spritzscheibe 122 lediglich einen radial außen liegenden Abschnitt der ersten Axialausnehmung 118 und begrenzt dort einen radial außen liegenden Ringraum (nicht näher bezeichnet).

In entsprechender Weise ist auf die zweite Axialausnehmung 120, die ebenfalls als Ringausnehmung ausgebildet ist, eine zweite Spritzscheibe 124 aufgesetzt, die als Ringscheibe ausgebildet ist und einen radial außenliegenden Ringraum bzw. eine radial außenliegende Ringtasche definiert.

Sofern Öl in die Ausnehmungen 118, 120 gelangt, wird dieses im Betrieb aufgrund von Zentrifugalkräften radial nach außen geleitet und staut sich dort auf, was in Fig. 4 schematisch durch ein Stauniveau 125 angedeutet ist.

Der Radkörper 116 ist ferner mit einer Mehrzahl von axialen Durchbrechungen (Verbindungskanälen) 126 versehen, die zwischen der Ringtasche 118 und der Ringtasche der Ausnehmung 120 verlaufen und eine Fluidverbindung hierzwischen einrichten.

Ferner ist in Fig. 4 gezeigt, dass an dem Gehäuse 24 ein Ölleitelement 128 vorgesehen sein kann, das von oben herunterströmendes Fluid auffängt und in axialer Richtung in die erste Axialausnehmung 118 leitet.

Mit anderen Worten wird aufgrund des Ölleitelements 128 gezielt Fluid in die Axialausnehmung 118 geleitet, so dass dieses sich im Betrieb in der Ringtasche aufstaut. Durch die Verbindungskanäle 126 bildet sich ein entsprechendes Fluidniveau auch in der gegenüberliegenden Ringtasche der Axialausnehmung 120 aus.

Die zwei Spritzscheiben 122, 124 sind mittels einer Mehrzahl von Zapfen 132 an dem Radkörper 116 festgelegt. Die Zapfen sind insbesondere vernietet, wobei eine flächige Anlage der Spritzscheiben 122, 124 an dem radial außen liegenden Abschnitt des Radkörpers 116 gewollterweise nicht fluiddicht ist.

Durch diese Verbindungsflächen wird folglich ein Fluidspalt 130 eingerichtet, wie es in Fig. 5 zu sehen ist. Das in den Ringtaschen aufgrund von Zentrifugalkräften befindliche Fluid wird über die Ringspalte 130 radial nach außen gedrückt und tritt im Bereich der Verzahnung 134 des Konstanten-Rades 46 aus.

Die Verzahnung 136 des damit in Eingriff stehenden Antriebsritzels 44 ist breiter (besitzt eine größere Zahnbreite) als die Verzahnung 134. Demzufolge wird das über die Ringspalte 130 radial ausströmende Fluid unmittelbar in den Eingriffsbereich der Verzahnungen 134, 136 geführt, so dass eine gute Schmierung bzw. Kühlung gewährleistet ist.

## Patentansprüche

1. Antriebseinheit (12) für ein Kraftfahrzeug (10), mit einem elektrischen Antriebsmotor (14), einem Wechselgetriebe (16) mit wenigstens zwei Gangstufen (1, 2) und einer Parksperreneinrichtung (64), **dadurch gekennzeichnet, dass** die Parksperreneinrichtung (64) an einer Motorwelle (40) des Antriebsmotors (14) oder an einer hiermit drehfest verbundenen Antriebswelle (42) angreift, wobei die Parksperreneinrichtung (64) eine Sperrmuffe (66) aufweist, die mit einer Innen- und mit einer Außenverzahnung versehen und axial in Bezug auf die Motorwelle (40) bzw. die hiermit verbundene Antriebswelle (42) verschiebbar ist, und zwar zwischen einer Freigabeposition und einer Sperrposition, wobei die Außenverzahnung der Sperrmuffe (66) in einem gehäusefesten Abschnitt (71) der Antriebseinheit (12) axial geführt ist und wobei die Motorwelle (40) oder die hiermit verbundene Antriebswelle (42) einen Außenverzahnungsabschnitt (108) aufweist, auf den die Sperrmuffe (66) verschiebbar ist, um die Sperrposition einzurichten.

2. Antriebseinheit nach Anspruch 1, **dadurch gekennzeichnet, dass** die Innenverzahnung der Sperrmuffe (66) und/oder der Außenverzahnungsabschnitt (108) der Motorwelle (40) bzw. der hiermit verbundenen Antriebswelle (42) an der axial zu der jeweils anderen Verzahnung weisenden Stirnseite angespitzt ist.

3. Antriebseinheit nach einem der Ansprüche 1 oder 2, **dadurch gekennzeichnet, dass** die Parksperreneinrichtung (64) mittels einer elektromotorischen Aktuatoreinrichtung (62) betätigbar ist.

4. Antriebseinheit nach Anspruch 3, **dadurch gekennzeichnet, dass** die Sperrmuffe (66) in Bezug auf die Aktuatoreinrichtung (62) in Richtung in die Sperrposition elastisch vorgespannt ist.

5. Antriebseinheit nach Anspruch 3 oder 4, **dadurch gekennzeichnet, dass** die Aktuatoranordnung (62) sowohl zur Betätigung der Parksperreneinrichtung (64) als auch zur Betätigung von Schaltkupplungen (SK1, SK2) zum Ein- bzw. Auslegen der Gangstufen (1, 2) des Wechselgetriebes (16) dient.

6. Antriebseinheit nach einem der Ansprüche 3 bis 5, **dadurch gekennzeichnet, dass** eine Motorwelle (40) des Antriebsmotors (14) oder eine hiermit verbundene Antriebswelle (42) über einen Konstanten-Radsatz (K) mit einer Zwischenwelle (48) verbunden ist und dass die Aktuatoranordnung (62) in axialer Richtung zumindest teilweise, vorzugsweise vollständig zwischen dem Antriebsmotor (14) und dem Konstanten-Radsatz (K) angeordnet ist.

7. Antriebseinheit nach einem der Ansprüche 1 bis 6, **dadurch gekennzeichnet, dass** eine Motorwelle (40) des Antriebsmotors (14) oder eine hiermit verbundene Antriebswelle (42) über einen Konstanten-Radsatz (K) mit einer Zwischenwelle (48) verbunden ist und dass die Parksperreneinrichtung (64) in axialer Richtung zwischen dem Antriebsmotor (14) und dem Konstanten-Radsatz (K) angeordnet ist.

8. Antriebseinheit nach einem der Ansprüche 1 bis 7, **dadurch gekennzeichnet, dass** der Antriebsmotor (14) für Drehzahlen größer 15.000 U/min, vorzugsweise für Drehzahlen größer 20.000 U/min ausgelegt ist.

9. Antriebseinheit nach einem der Ansprüche 1 bis 8, **dadurch gekennzeichnet, dass** in dem Gehäuse (24) ein Kühlpfad (78) zur Kühlung des Antriebsmotors (14), des Wechselgetriebes (16) und/oder einer Leistungselektronik ausgebildet ist.

10. Antriebseinheit (12) nach einem der Ansprüche 1 bis 9, mit einem Radsatz (44, 46), wobei der Radsatz (44, 46) ein erstes, vorzugsweise antreibendes Zahnrad (44) und ein zweites Zahnrad (46) aufweist, das in axialer Richtung schmaler ausgebildet ist als das erste Zahnrad (44), und wobei das zweite Zahnrad (46) an wenigstens einer axialen Außenseite eine Ausnehmung (118, 120) aufweist, die innenumfänglich eine Ringtasche zur Aufnahme von Schmier- bzw. Kühlfluid aufweist, und wobei sich von der Ringtasche wenigstens ein Schmierkanal (130) radial nach außen erstreckt, durch den hindurch während des Betriebs Schmier- bzw. Kühlfluid auf die Verzahnung des ersten Zahnrads (44) strömt.

11. Antriebseinheit nach Anspruch 10, **dadurch gekennzeichnet, dass** an der axialen Außenseite des zweiten Zahnrades (46) eine Ringscheibe (122, 124) befestigt ist, die die Ringtasche axial begrenzt, und wobei zwischen der Ringscheibe (122, 124) und der axialen Außenseite ein Ringspalt (130) eingerichtet ist, der den Schmierkanal (130) bildet.

12. Antriebseinheit nach Anspruch 10 oder 11, **dadurch gekennzeichnet, dass** der Radsatz (44, 46) benachbart zu einem Gehäuse (24) der Antriebseinheit (12) gelagert ist und dass an dem Gehäuse (24) ein Fluidleitelement (128) angeordnet ist, mittels dessen Fluid in axialer Richtung in die Ausnehmung (118) geführt wird.

## Claims

1. Drive unit (12) for a motor vehicle (10), having an electric drive motor (14), a variable-speed transmission (16) with at least two gear stages (1, 2) and a parking lock device (64), **characterized in that** the parking lock device (64) engages on the motor shaft (40) of the drive motor (14) or on the driveshaft (42) rotationally conjointly connected to said motor shaft, wherein the parking lock device (64) has a locking sleeve (66) which is provided with an internal toothing and with an external toothing and which is movable axially in relation to the motor shaft (40) or in relation to the driveshaft (42) connected thereto, specifically between a release position and a locking position, wherein the external toothing of the locking sleeve (66) is guided axially in a portion (71), which is fixed with respect to the housing, of the drive unit (12) , and wherein the motor shaft (40) or the driveshaft (42) connected thereto has an external toothing portion (108) on which the locking sleeve (66) is movable in order to establish the locking position.

2. Drive unit according to claim 1, **characterized in that** the internal toothing of the locking sleeve (66) and/or the external toothing portion (108) of the motor shaft (40) or of the driveshaft (42) connected thereto is tapered at the end side pointing toward the respective other toothing.

3. Drive unit according to one of Claims 1 or 2, **characterized in that** the parking lock device (64) can be actuated by means of an electric-motor actuator device (62).

4. Drive unit according to Claim 3, **characterized in that** the locking sleeve (66) is preloaded elastically in relation to the actuator device (62) in the direction of the locking position.

5. Drive unit according to Claim 3 or 4, **characterized in that** the actuator arrangement (62) serves both for the actuation of the parking lock device (64) and also for the actuation of shift clutches (SK1, SK2) for the engagement and disengagement of the gear stages (1, 2) of the variable-speed transmission (16).

6. Drive unit according to one of Claims 3 to 5, **characterized in that** a motor shaft (40) of the drive motor (14) or a drive shaft (42) connected therewith is connected by means of a constant gear set (K) with an intermediate shaft (48) and that the actuator arrangement (62) is arranged at least partially, preferably entirely between the drive motor (14) and the constant gear set (K) in an axial direction.

7. Drive unit according to one of Claims 1 to 6, **characterized in that** a motor shaft (40) of the drive motor (14) or a drive shaft (42) connected therewith is connected by means of a constant gear set (K) with an intermediate shaft (48) and that the parking lock device (64) is arranged between the drive motor (14) and the constant gear set (K) as viewed in an axial direction.

8. Drive unit according to one of Claims 1 to 7, **characterized in that** the drive motor (14) is designed for rotational speeds of higher than 15,000 rpm, preferably for rotational speeds of higher than 20,000 rpm.

9. Drive unit according to one of Claims 1 to 8, **characterized in that** a cooling path (78) for cooling the drive motor (14), the variable-speed transmission (16) and/or power electronics is formed in the housing (24).

10. Drive unit according to one of Claims 1 to 9, comprising a gear set (44, 46), wherein the gear set (44, 46) has a first preferably driven gear wheel (44) and a second gear wheel (46), which is in an axial direction formed thinner than the first gear wheel (44) and wherein the second gear wheel (46) has at least at one axial outer side a recess (118, 120), which comprises an inner circumferential ring pocket for receiving grease or cooling fluid, and wherein at least one grease channel (130) extends from the ring pocket in a radial outer direction, through which grease or cooling fluid flows onto the toothing of the first gear wheel (44) during the operation.

11. Drive unit according to Claim 10, **characterized in that** a ring disc (122, 124) is attached at an axial outer side of the second gear wheel (46), which limits the ring pocket axially, and wherein a ring gap (130) is formed between the ring disc (122, 124) and the axial outer side, which forms the grease channel (130).

12. Drive unit according to Claim 10 or 11, **characterized in that** the gear set (44, 46) is mounted adjacent to a housing (24) of the drive unit (12) and that a fluid member (128) is disposed at the housing (24), by means of which fluid is conducted in the axial direction into the recess (118).

## Revendications

1. Unité d'entraînement (12) pour un véhicule automobile (10), comprenant un moteur d'entraînement électrique (14), une boîte de vitesses (16) avec au moins deux rapports de vitesses (1, 2) et un dispositif de verrouillage de stationnement (64), **caractérisée en ce que** le dispositif de verrouillage de stationnement (64) vient en prise sur un arbre de moteur (40) du moteur d'entraînement (14) ou sur un arbre d'entraînement (42) connecté de manière solidaire en rotation à celui-ci, le dispositif de verrouillage de stationnement (64) présentant un manchon de verrouillage (66) qui est pourvu d'une denture interne et d'une denture externe et qui peut être déplacé axialement par rapport à l'arbre de moteur (40) ou à l'arbre d'entraînement (42) connecté à celui-ci, et ce entre une position de libération et une position de verrouillage, la denture externe du manchon de verrouillage (66) étant guidée axialement dans une portion (71) fixée au boîtier de l'unité d'entraînement (12) et l'arbre de moteur (40) ou l'arbre d'entraînement (42) connecté à celui-ci présentant une portion de denture externe (108), sur laquelle peut être déplacé le manchon de verrouillage (66), afin d'ajuster la position de verrouillage.

2. Unité d'entraînement selon la revendication 1, **caractérisée en ce que** la denture interne du manchon de verrouillage (66) et/ou la portion de denture externe (108) de l'arbre de moteur (40) ou de l'arbre d'entraînement (42) connecté à celui-ci, est moulée sur le côté frontal tourné axialement vers l'autre denture respective.

3. Unité d'entraînement selon l'une quelconque des revendications 1 ou 2, **caractérisée en ce que** le dispositif de verrouillage de stationnement (64) peut être actionné au moyen d'un dispositif d'actionneur (62) à moteur électrique.

4. Unité d'entraînement selon la revendication 3, **caractérisée en ce que** le manchon de verrouillage (66) est précontraint élastiquement par rapport au dispositif d'actionneur (62) dans la direction de la position de verrouillage.

5. Unité d'entraînement selon la revendication 3 ou 4, **caractérisée en ce que** l'agencement d'actionneur (62) sert à la fois à l'actionnement du dispositif de verrouillage de stationnement (64) et à l'actionnement d'embrayages (SK1, SK2) pour l'embrayage ou le débrayage des rapports de vitesses (1, 2) de la boîte de vitesses (16).

6. Unité d'entraînement selon l'une quelconque des revendications 3 à 5, **caractérisée en ce qu'**un arbre de moteur (40) du moteur d'entraînement (14) ou un arbre d'entraînement (42) connecté à celui-ci est connecté par le biais d'un jeu de pignons constant (K) à un arbre intermédiaire (48) et **en ce que** l'agencement d'actionneur (62) est disposé dans la direction axiale au moins en partie, de préférence complètement entre le moteur d'entraînement (14) et le jeu de pignons constant (K).

7. Unité d'entraînement selon l'une quelconque des revendications 1 à 6, **caractérisée en ce qu'**un arbre de moteur (40) du moteur d'entraînement (14) ou un arbre d'entraînement (42) connecté à celui-ci est connecté par le biais d'un jeu de pignons constant (K) à un arbre intermédiaire (48) et **en ce que** le dispositif de verrouillage de stationnement (64) est disposé dans la direction axiale entre le moteur d'entraînement (14) et le jeu de pignons constant (K).

8. Unité d'entraînement selon l'une quelconque des revendications 1 à 7, **caractérisée en ce que** le moteur d'entraînement (14) est conçu pour des régimes supérieurs à 15 000 tr/m, de préférence pour des régimes supérieurs à 20 000 tr/m.

9. Unité d'entraînement selon l'une quelconque des revendications 1 à 8, **caractérisée en ce qu'**un chemin de refroidissement (78) pour le refroidissement du moteur d'entraînement (14), de la boîte de vitesses (16) et/ou d'une électronique de puissance est réalisé dans le boîtier (24).

10. Unité d'entraînement (12) selon l'une quelconque des revendications 1 à 9, comprenant un jeu de pignons (44, 46), le jeu de pignons (44, 46) présentant un premier pignon denté de préférence d'entraînement (44) et un deuxième pignon denté (46) qui est plus étroit dans la direction axiale que le premier pignon denté (44), et le deuxième pignon denté (36) présentant, au niveau d'au moins un côté extérieur axial, un évidement (118, 120) qui présente du côté périphérique intérieur une cavité annulaire pour recevoir un fluide de lubrification ou de refroidissement, et au moins un canal de lubrification (130) s'étendant radialement vers l'extérieur depuis la cavité annulaire, à travers lequel du fluide de lubrification ou de refroidissement s'écoule pendant le fonctionnement sur la denture du premier pignon denté (44).

11. Unité d'entraînement selon la revendication 10, **caractérisée en ce qu'**un disque annulaire (122, 124) est fixé au niveau du côté extérieur axial du deuxième pignon denté (46), lequel limite axialement la cavité annulaire, et une fente annulaire (130) étant prévue entre le disque annulaire (122, 124) et le côté extérieur axial, laquelle forme le canal de lubrification (130).

12. Unité d'entraînement selon la revendication 10 ou 11, **caractérisée en ce que** le jeu de pignons (44, 46) est supporté de manière adjacente à un boîtier (24) de l'unité d'entraînement (12) et **en ce qu'**un élément de guidage de fluide (128) est disposé au niveau du boîtier (24), au moyen duquel du fluide est guidé dans la direction axiale dans l'évidement (118).
